(19) Europäisches Patentamt
European Patent Office
Office européen des brevets

(11) Veröffentlichungsnummer: **0 438 810 A2**

# (12) EUROPÄISCHE PATENTANMELDUNG

(21) Anmeldenummer: **90125836.8**

(22) Anmeldetag: **31.12.90**

(51) Int. Cl.$^5$: **C08G 65/40**, G02F 1/133

(30) Priorität: **25.01.90 DE 4002082**

(43) Veröffentlichungstag der Anmeldung:
**31.07.91 Patentblatt 91/31**

(84) Benannte Vertragsstaaten:
**AT BE CH DE DK ES FR GB GR IT LI LU NL SE**

(71) Anmelder: **HOECHST AKTIENGESELLSCHAFT**
**Postfach 80 03 20**
**W-6230 Frankfurt am Main 80(DE)**

(72) Erfinder: **Dübal, Hans-Rolf Dr.**
**Heuhohlweg 6**
**W-6240 Königstein/Taunus(DE)**
Erfinder: **Murakami, Mikio**
**New Town Blg 202 8-1 Minami 2-chome**
**Kakegawa-shi Shizuoka-ken(JP)**
Erfinder: **Drotloff, Hans-Otto Dr.**
**Loreleistrasse 7**
**W-6230 Frankfurt am Main(DE)**
Erfinder: **Brekner, Michael Dr.**
**Geisenheimer Strasse 90**
**W-6000 Frankfurt am Main(DE)**

## (54) Verwendung von Polyaryletherketonen als Orientierungsschichten.

(57) Durch die Verwendung von Polyaryletherketonen der Struktureinheit -O-A-O-B- werden Orientierungsschichten für Flüssigkristall-anzeige und -schaltelemente erhalten, die bei höher Transparenz und geringer Wasseraufnahme eine besonders gleichmäßige Orientierung sowohl smektischer als auch nematischer Flüssigkristalle besitzen und damit eine hohe Kontrastfähigkeit ermöglichen.

EP 0 438 810 A2

Xerox Copy Centre

# VERWENDUNG VON POLYARYLETHERKETONEN ALS ORIENTIERUNGSSCHICHTEN

Die Erfindung bezieht sich auf die Verwendung von Polyaryletherketonen bei der Herstellung von Orientierungsschichten für Flüssigkristallanzeigeelemente und Flüssigkristallschaltelemente.

Die Kombination der Wirkungen ungewöhnlicher anisotroper und fluider Eigenschaften von Flüssigkristallen hat bekanntlich zur Verwendung von Flüssigkristallen in einer Vielzahl von elektro-optischen Schalt- und Anzeigevorrichtungen (LCD) geführt. Dabei können die elektrischen, magnetischen, elastischen oder thermischen Eigenschaften der Flüssigkristalle zu Orientierungsänderungen ausgenutzt werden. Optische Effekte lassen sich dann mit Hilfe der Doppelbrechung, der Einlagerung von Farbstoffen oder der Lichtstreuung erzielen. Zu diesem Zweck wurden bisher sowohl nematische als auch smektische Flüssigkristallphasen verwendet. Beispiele für solche Schalt- und Anzeigevorrichtungen sind aus zahlreichen Veröffentlichungen bekannt.

Als gemeinsame Bestandteile aller Flüssigkristallschaltvorrichtungen und Flüssigkristallanzeigevorrichtungen sind dabei u.a. Trägerplatten, z.B. aus Glas oder Kunststoff, beschichtet mit transparenten Elektroden und einer Orientierungsschicht zu nennen. Hinzu kommen Abstandhalter, Kleberahmen, Polarisatoren, sowie für Farbdisplays dünne Farbfilterschichten. Weitere mögliche Komponenten sind Antireflex-, Passivierungs-, Ausgleichs- und Sperrschichten sowie elektrische nichtlineare Elemente, wie Dünnschichttranssistoren (TFT) und Metall-Isolator-Metall (MIM)-Elemente. Im Detail ist der Aufbau von Flüssigkristalldisplays beispielsweise beschieben in E. Kaneko, "Liquid Crystal TV Displays: Principles and Applications of Liquid Crystal Displays", KTK Scientific Publishers, Tokio, 1987, Seiten 12-30 und 163-172.

Unter den oben genannten Bestandteilen ist u.a. die Orientierungsschicht von besonderer Bedeutung. Sie dient bekanntlich dem Zweck, eine gleichmäßige, störungsfreie Ausrichtung der Moleküllängsachsen und damit einen hohen Kontrast zu gewährleisten. Sie kann aus organischen Polymerisaten oder gegebenenfalls auch aus organischen Schichten bestehen.

Organische Polymerisatschichten werden üblicherweise auf die zu beschichtenden Flächen in Form von Polymerisatlösungen oder Lösungen löslicher Polymerisatvorstufen durch Druck-, Sprüh-, Tauch- oder Schleuderverfahren aufgetragen und anschließend - im allgemeinen durch Erhitzen des Naßfilms - ausgehärtet bzw. getrocknet. Zur Erzielung einer orientierenden Wirkung wird die erhaltene harte Polymerisatschicht mit einer samtartig bechichteten oder mit Samt bezogenen Walze, einer Bürste oder ähnlichen Vorrichtungen "gerieben" und dadurch die Polymerisatoberfläche vorzugsweise geradlinig bzw. richtungsorientiert aufgerauht.

Zur Herstellung elektro-optischer Schalt- und Anzeigeelemente auf der Basis von Flüssigkristallen werden für Orientierungsschichten bereits Polyetherimide, Polyvinylalkohole und bestimmte, vorzugsweise aliphatische, Polyamide (Nylon) eingesetzt. Wegen des Auftretens von Alterungsproblemen bei Verwendung von Polyvinylalkohol wird dieser für die Massenproduktion von Flüssigkristalldisplays heute kaum noch verwendet. Bei den meisten handelsüblichen Polyetherimid-Vorstufen liegen die Imidisierungstemperaturen der Ausgangs-Polyamidcarbonsäuren oberhalb von 350 °C. Solch hohe Reaktionstemperaturen sind zwar für herkömmliche LCD-Anwendungen, das sind kleinflächige schwarz/weiß-Displays, z.B. für Uhren, Taschenrechner, akzeptabel, sie sind aber schädlich für großflächige Ausführungen der LCD, wie Fernseh- und Computerbildschirme. Der Grund dafür ist einerseits die Gefahr eines möglichen Verbiegens der mit Indium-Zinnoxid beschichteten Glasträger bei hohen Temperaturen, und andererseits die Gefahr der thermischen Zerstörung von Farbfiltern, die oberhalb von 200 °C einsetzen kann. Diese Gefahren treten zwar mit löslichen Polyetherimiden im allgemeinen nicht auf, jedoch haften lösliche Polyetherimide nur unzureichend auf Glas bzw. auf den mit Indium-Zinnoxid beschichteten Glasträgern, so daß infolgedessen ein zusätzlicher Verfahrensschritt, nämlich das Aufbringen eines Haftvermittlers, erforderlich wird. Demgegenüber treten z.B. mit aliphatischen Polyamiden zwar keine Haftungs- und Temperaturprobleme auf, jedoch ist mit den dafür erforderlichen Lösungsmittel - z.B. Kresol oder Ameisensäure - unter den einzuhaltenden Verfahrensbedingungen, d.h. Arbeiten im Reinraum, sehr schwierig umzugehen, da sie spezielle Abluft- bzw. Abzugsvorrichtungen und eine aufwendige und teure Zuführung von klimatisierter Frischluft erforderlich machen. Dipolar aprotische Lösungsmittel, z.B. N-Methyl-pyrrolidon (Kp. 206 °C), oder $\gamma$-Butyrolacton könnten hierbei zum Einsatz kommen, jedoch sind z.B. aliphatische Polyamide in diesen Lösungsmitteln unlöslich oder nicht ausreichend löslich.

Hersteller von Flüssigkristalldisplays stellen besonders hohe Anforderungen an die Wasseraufnahme der Orientierungsschicht, die möglichst gering sein soll, weil bei Einsatz von in Dünnschichttechnik aufgebrachten Halbleiterstrukturen durch Ionendiffusion in die Halbleiterzone irreversible Schäden auftreten können. Bei Polyamiden und Polyetherimiden ist die Wasseraufnahme jedoch sehr hoch. Für ferroelektrische Flüssigkristalldisplays benötigt man besonders Orientierungsschichten, die für Mischungen mit hoher

spontaner Polarisation (≧ 15 nC/$cm^2$ bei der Betriebstemperatur des Displays) und daher kurzen Schaltzeiten eine gute Kontrastfähigkeit besitzen. Bei der Verwendung von Polyamiden und Polyetherimiden beobachtet man jedoch das Auftreten von verdrillten Zuständen bei hoher spontaner Polarisation. Diese verdrillten Zustände sind im dunklen Schaltzustand nicht schwarz, sondern statt dessen farbig, typischerweise grau-blau. Im hellen Schaltzustand sind sie nicht weiß, sondern ebenfalls farbig und besitzen eine wesentlich geringere Helligkeit als in einem homogenen, d.h. nicht verdrillten Zustand. Durch diese farbigen Verdrillungszustände wird der Kontrast ganz erheblich erniedrigt.

Handelsübliche Polyaryletherketone, wie ®VICTREX PEEK bzw. PEK der Firma ICI Ltd., Welwyn Garden City, England und ®KADEL der Firma Amoco Corporation, Chicago, Illinois, USA sind teilkristallin. Es handelt sich dabei um Polykondensate, deren Moleküle im wesentlichen unverzweigt und überwiegend aus unsubstituierten Phenyl- oder Biphenyleinheiten aufgebaut sind, die überwiegend para-ständig durch Ether- oder Carbonylgruppen miteinander verknüpft werden. Sie sind außerordentlich beständig gegen Lösemittel und chemischen Angriff und zeichnen sich in gefülltem Zustand durch hohe Wärmeformbeständigkeit aus.

Kann die Kristallisationsneigung solcher Polyaryletherketone, etwa durch Störung der oben geschilderten relativ einfachen, sehr regelmäßigen Kettenstruktur unterbunden werden, beispielsweise durch Einbau eines erhöhten Anteils an ortho- bzw. meta Verknüpfungen der Phenylringe, durch Einbau von Einheiten, die substituierte aromatische Ringe enthalten, erhält man amorphe Polykondensate. Diese sind in herkömmlichen Lösemitteln (Chloroform, N,N-Dimethylacetamid, N,N-Dimethylformamid oder N-Methyl-2-pyrrolidon) löslich. Sie weisen im DSC-Diagramm nur eine einzige Glastemperatur und keinen Schmelzpunkt auf. Aus Lösung oder Schmelze bilden sie zähe, flexible und transparente Filme. Anders als etwa die ebenfalls amorphen Polyarylethersulfone haben amorphe Polyaryletherketone bisher noch keine technische Bedeutung als Thermoplaste gewonnen.

Der Erfindung liegt die Aufgabe zugrunde, geeignete Orientierungsschichten für Flüssigkristallanzeigen verfügbar zu machen, die sich bei relativ niedrigen Temperaturen, d.h. unterhalb von 200°C, aushärten lassen, eine gute Haftfestigkeit auf der Trägerunterlage, hohe Transparenz und geringe Wasseraufnahme besitzen, und die eine besonders gleichmäßige Orientierung sowohl smektischer als auch nematischer Flüssigkristalle und damit eine hohe Kontrastfähigkeit ermöglichen.

Es wurde nun gefunden, daß man transparente, gut haftende, bei Temperaturen unterhalb von 200°C aushärtbare, aus N-Methylpyrrolidonlösung, γ-Butylrolactonlösung o.ä. auftragbare Orientierungsschichten mit geringer Wasseraufnahme sowohl für smektische als auch nematische Flüssigkristalle erhalten kann, wenn man als Polymerisat amorphe Polyaryletherketone verwendet, die Struktureinheiten der nachstehend angegebenen Formel I enthalten. Diese Orientierungsschichten ergeben besonders hohe Kontrastwerte für ferroelektrische Flüssigkristalle mit hohen Werten der spontanen Polarisation.

Die Erfindung betrifft die Verwendung mindestens eines Polyaryletherketons, das aus mindestens einer Struktureinheit der Formel I

-O-A-O-B- (I)

aufgebaut ist, für Orientierungsschichten für Flüssigkristallanzeige- und -schaltelemente, wobei A ausgewählt ist aus den Resten

A1 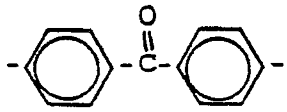

A2 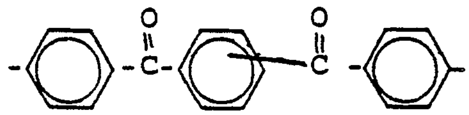 (m oder p)

A3 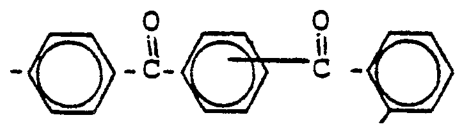 (m oder p)

und B ausgewählt ist aus den Resten

B1 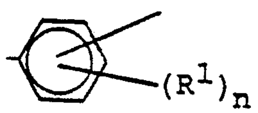

B2 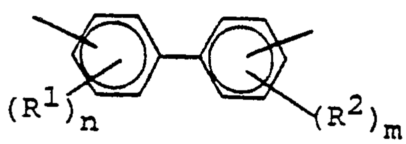

B3 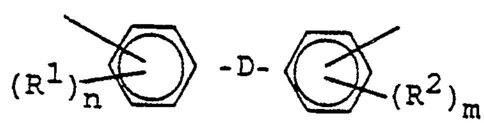

B4 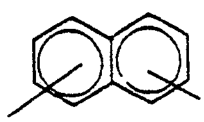

B5 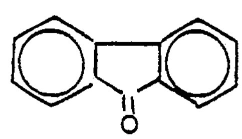

B6 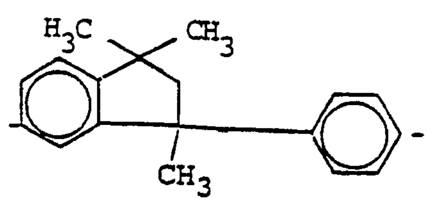

B7 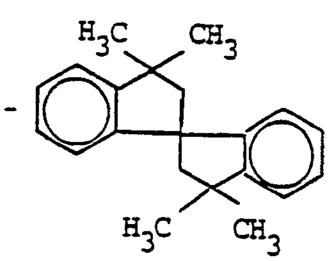

B8 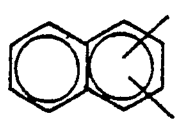

mit $R^1$ und $R^2$, die gleich oder verschieden sind und Wasserstoff, Halogen, vorzugsweise Brom, $(C_1-C_8)$-Alkyl oder -Alkoxy, vorzugsweise $(C_1-C_4)$-Alkyl oder -Alkoxy darstellen oder Aryl oder Aryloxy mit 6 bis 12 C-Atomen im Arylrest bedeuten, m und n sind gleich oder verschieden und bedeuten Null oder als ganze Zahl 1, 2, 3 oder 4, vorzugsweise Null, 1 oder 2, insbesondere Null oder 2. Stellen $R^1$ und $R^2$ in den Resten $B^2$ und $B^3$ Halogen dar, sind m und n vorzugsweise 2. D ist ausgewählt aus den zweiwertigen Resten

$D^1$ - O - , $D^2$ 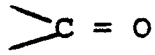, $D^3$ - $CH_2$ -,

$D^4$ - $C(CH_3)_2$ -, $D^5$ - $C(CF_3)_2$ - ,

$D^6$ 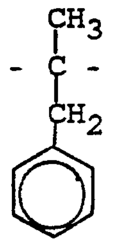 , $D^7$ 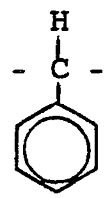 , $D^8$ 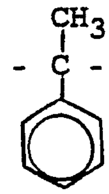

$D^9$ 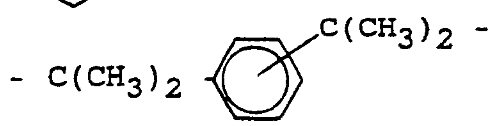 (m oder p)

$D^{10}$ 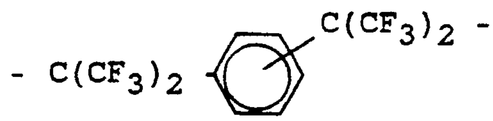 (m oder p),

wobei das molare Verhältnis der Einheiten A und B 0,9 bis 1,1 zu 1,0, vorzugsweise 1:1, beträgt.

Die aufgeführten Polymeren können Homopolykondensate sein, die also nur je eine Einheit vom Typ A und eine Einheit vom Typ B je wiederkehrender Einheit enthalten, oder Copolykondensate, welche zwei oder mehrere verschiedene Einheiten vom Typ A und/oder zwei oder mehrere verschiedene Einheiten vom Typ B enthalten.

A wird bevorzugt ausgewählt aus $A^1$ und $A^2$ und besonders bevorzugt ist $A^2$. B wird bevorzugt ausgewählt aus $B^1$, $B^2$, $B^3$, besonders bevorzugt ist $B^3$. D ist vorzugsweise $D^2$, $D^3$, $D^4$, $D^5$, $D^6$, $D^7$, $D^8$, $D^9$, $D^{10}$, die vorzugsweise in para-Stellung verknüpft sind. Besonders bevorzugt sind $D^4$, $D^5$, $D^9$, $D^{10}$.

Ist A ausgewählt worden aus $A^1$ und $A^2$, so stellt B nicht $B^4$ dar. Wenn B gleich $B^3$ und n gleich Null ist, wird in diesem Falle $D^1$ und $D^2$ nicht ausgewählt.

Ist in der Struktureinheit der Formel (I) A gleich $A^3$, so ist B bevorzugt $B^1$ oder $B^2$ mit n gleich Null, 1 oder 2, insbesondere n gleich Null.

Handelt es sich bei den Polyaryletherketonen, deren Verwendung erfindungsgemäß beansprucht wird, nicht um Homo-, sondern um Copolykondensate, so ist A ausgewählt aus $A^1$, $A^2$ oder $A^3$, bevorzugt aus $A^1$ und $A^2$. Besonders bevorzugt ist A gleich $A^2$. Als Komponente B wird eine Mischung aus 0-50 Mol% $B^1$ und 50-0% Mol%, ausgewählt aus $B^2$ bis $B^8$ eingesetzt, insbesondere 5-10 Mol% $B^1$ und 45-40 Mol-% $B^2$, $B^3$ und $B^4$. Hiervon wiederum ist $B^3$ besonders bevorzugt. Ebenso kann A 0-50 Mol-% $A^2$ und 50-0 Mol-% $A^3$, vorzugsweise 5-30 Mol-% $A^2$ und 45-20 Mol-% $A^3$ sein, wobei B gleich $B^1$, $B^2$ oder $B^4$ und im bevorzugten Bereich gleich $B^1$ und n gleich Null ist.

Neben der Verwendung eines Homo- oder eines Copolykondensates können auch Polymermischungen eingesetzt werden, bestehend aus zwei oder mehreren der oben erwähnten Homopolykondensate, aus einem oder mehreren der erwähnten Homopolykondensate und einem oder mehreren der erwähnten Copolykondensate oder aus zwei oder mehreren der erwähnten Copolykondensate.

Als Voraussetzung dafür, daß ein Thermoplast transparent ist, gilt die Abwesenheit intrinsischer Absorption in dem betreffenden Wellenlängenbereich und die Abwesenheit von Brechungsindexfluktuationen, die merkliche Streuverluste hervorrufen. Brechungsindexfluktuationen werden entweder durch physikalische Zweiphasigkeit, d.h.

Teilkristallinität, oder durch chemische Zweiphasigkeit, d.h. Entmischung, hervorgerufen. Verunreinigungen können sich sowohl als Absorptions- wie auch als Streuzentren negativ auf die Transparenz von Materialien auswirken, sind aber im Gegensatz zu den vorher erwähnten Faktoren mittels technologischer Maßnahmen, die sich sowohl auf die Polymersynthese als auch auf die Polymerverarbeitung beziehen, zu beseitigen.

Bei den Polyaryletherketonen führt sowohl die Ether- wie auch die Ketogruppe nicht zu starken Delokalisierungen der aromatischen Elektronenhüllen. Daher ist auch der bathochrome Effekt dieser

Gruppen nicht so groß, daß eine nennenswerte Absorption im sichtbaren Wellenlängenbereich, d.h. oberhalb 400 nm, vorzugsweise zwischen 450 und 800 nm, vorliegt.

Bekannt ist auch, daß Ether- und Ketogruppen relativ hydrolyseunempfindlich sind. Die Abwesenheit von sauren Wasserstoffatomen als auch die Abwesenheit starker Dipole bei einem hohen, aromatisch hydrophoben Charakter läßt auf eine niedrige Wasseraufnahme der Polyaryletherketone schließen.

Aromatische Polyether lassen sich herstellen durch eine elektrophile Polykondensationsreaktion (Friedel-Crafts-Reaktion) von mehrkernigen aromatischen Säurehalogeniden (wobei mindestens ein Arylrest elektronenliefernde Substituenten tragen muß), beispielsweise eines Phenoxyarylsäurechlorids, oder durch Kondensation eines Dicarbonsäurehalogenids mit einem elektronenreichen Aromaten, beispielsweise einem Diaryläther (US-A 3.956.240).

Eine andere Synthesemöglichkeit ist die nuklophile Polykondensation (nukleophile Substutionsreaktion) von Halogenphenolen, wobei die Halogengruppe durch ortho- oder paraständige elektronegative Substituenten aktiviert ist, oder von zweiwertigen, ein- oder mehrkernigen Phenolen mit aktivierten Dihalogenaromaten. Bei der nukleophilen Polykondensation ist das aus dem Phenol durch Einwirken von Alkalien gebildete Phenolat das eigentliche Agens. (DE-PS 1 545 106 und CA-PS 847 963).

Die Herstellung der erfindungsgemäß verwendeten amorphen Polyaryletherketone erfolgt unter üblichen Bedingungen und unter Umsatz der genannten Reaktionspartner (Monomeren) nach bekannten Verfahren, beispielsweise von aromatischen Dihydroxyverbindungen (B') mit aktivierten aromatischen Dihalogenverbindungen (A').

Im obengenannten Fall, also bei Umsatz von Dihydroxyverbindungen (B') mit aktivierten aromatischen Dihalogenverbindungen (A'), beträgt das Molverhältnis der beiden Reaktanden normalerweise 0,9 bis 1,1 zu 1,0. Vorzugsweise setzt man die Verbindungen im Molverhältnis von 1:1 oder mit einem geringen Überschuß der Dihalogenverbindung ein, sodaß dieses Verhältnis auch bei den Einheiten A und B der Formel I anzutreffen ist.

Als aromatische Dihydroxyverbindungen (B') kommen z.B. einkernige Diphenole der Formel

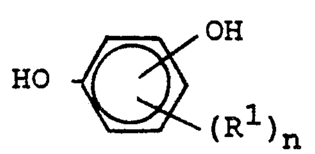

(II)

wie Hydrochinon, Resorcin oder deren Homologe wie Methylhydrochinon, 2,5-Dimethylhydrochinon, 2,3,5,6-Tetramethylhydrochinon sowie 2-Methylresorcin in Betracht. Bevorzugt werden Hydrochinon, Resorcin und 2,5-Dimethylhydrochinon. Geeignete mehrkernige Dihydroxyverbindungen sind beispielsweise solche, in denen zwei alkyl- oder alkoxy-substituierte oder unsubstituierte Phenolreste durch eine direkte Bindung oder durch Atome bzw. Gruppen wie Alkyliden, Sauerstoff oder Carbonyl verknüpft sind. Die Verbindungen lassen sich durch die Formel III

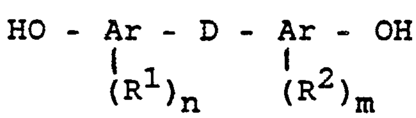

(III)

beschreiben, wobei Ar für einen Arylenrest, vorzugsweise Phenylen, steht, der durch Gruppen $R^1$ und $R^2$ substituiert sein kann. $R^1$ und $R^2$ stehen für Halogen, vorzugsweise Brom, Alkylgruppen oder Alkoxygruppen mit jeweils 1 bis 8, vorzugsweise 1 bis 4 C-Atomen und Aryl- oder Aryloxygruppen wobei Aryl vorzugsweise Phenyl ist. m und n sind Null oder ganze Zahlen 1, 2, 3 oder 4. D ist eine $C_{1-3}$-Alkylidengruppe, die gegebenenfalls mit Halogen, vorzugsweise Fluor, oder mit einem Arylkern substituiert ist, oder eine $C_6$-Cycloalkylidengruppe (bei Bisphenolen hergestellt aus gegebenenfalls substituierten Phenolen und Oxoverbindungen wie Aceton, Formaldehyd, Cyclohexanon etc.) oder eine direkte Bindung und schließt die Gruppierungen ein: -O-, -C = O,

$-CH_2-$ , $-C(CH_3)_2-$, $-C(CF_3)_2-$, 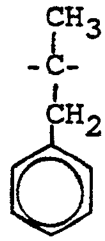 , 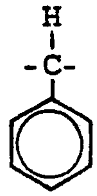 ,

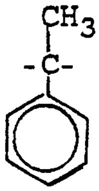 , 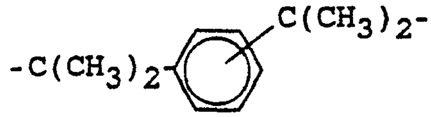 , 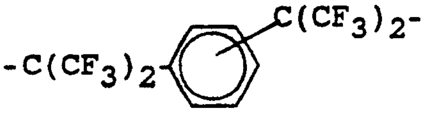

Beispiele für derartige Verbindungen der Formel (III) sind Bis(4-hydroxyphenyl)methan, 3,4'-Dihydroxydiphenyl, 4,4'-Dihydroxybenzophenon, 4,4'-Dihydroxydiphenylether, Bis-(3,5-dimethyl-4-hydroxyphenyl)-methan, 2,2-Bis(4-hydroxyphenyl)-1-phenylpropan, 1,1-Bis(4-hydroxyphenyl)-1-phenylethan, 1,3-Bis(4-hydroxyphenylisopropyliden)benzol, 1,3-Bis(3,5-dimethyl-4-hydroxyphenylisopropyliden)benzol, 1,3-Bis(4-hydroxyphenyl-1,1,1,3,3,3-hexafluorisopropyliden) benzol, 1,3-Bis(3,5-dimethyl-4-hydroxyphenyl-1,1,1,3,3,3-hexafluorisopropyliden)benzol, 2,7-Dihydroxynaphtalin, 2,3-Dihydroxynaphtalin, 1,4-Dihydroxynaphtalin, 2,7-Dihydroxy-9-fluorenon, sowie die bevorzugt eingesetzten Verbindungen 2,2-Bis(4-hydroxyphenyl)propan (Bisphenol A), 2,2-Bis(3, 5-dimethyl-4-hydroxyphenyl)propan, 2,2-Bis(3,5-dibrom-4-hydroxyphenyl)propan, 2,2-Bis(4-hydroxyphenyl)-1,1,1,3,3,3-hexafluorpropan, 3,3'-Dihydroxydiphenyl, 4,4'-Dihydroxdiphenyl, 3,3',5,5'- Tetramethyl-4,4'-dihydroxydiphenyl, 3,3'-5,5'-Tetramethyl-4,4'-dihydroxybenzophenon, 2,2-Bis(3,5-dimethyl-4-hydroxyphenyl)-1,1,1,3,3,3-hexafluorpropan, 1,4-Bis(4-hydroxyphenylisopropyliden)benzol, 1,4-Bis(3,5-dimethyl-4-hydroxyphenylisopropyliden)benzol, 1,4-Bis(4-hydroxyphenyl-1,1,1,3,3,3-hexafluorisopropyliden)benzol, 1,4-Bis(3,5-dimethyl-4-hydroxyphenyl-1,1,1,3,3,3-hexafluorisopropyliden)benzol, 1,5-Dihydroxynaphtalin, 2,6-Dihydroxynaphtalin, 5-Hydroxy-3-(4-hydroxyphenyl)-1,1,3-trimethylindan, 5-Hydroxy-3-(3,5-dimethyl-4-hydroxyphenyl)-1,1,3,4,6-pentamethylindan, 6,6'-Dihydroxy-3,3,3',3'-tetramethyl-1,1'-spirobiindan.

Die aktivierten aromatischen Dihalogenverbindungen (A') sind ein- oder mehrkernige Verbindungen, deren Halogenatome durch elektronegative Substituenten in o- oder p-Stellung zu ihnen aktiviert sind. Bei mehrkernigen Verbindungen befinden sich die Halogenatome vorzugsweise an verschiedenen Benzolkernen; die elektronegativen Substituenten können hier das Verbindungsglied zwischen den Benzolkernen sein. Derartige geeignete Dihalogenverbindungen sind 1-(2'-Chlorbenzoyl)-4-(4'-chlorbenzoyl) benzol und 1-(2'-Chlorbenzoyl)-3-(4'-chlorbenzoyl) benzol, vorzugsweise aber 4,4'-Dichlorbenzophenon, 4,4'-Difluorbenzophenon, 1,4-Bis(4'-fluorbenzoyl)benzol, 1,4-Bis(4'-chlorbenzoyl)benzol, 1,3-Bis(4'-fluorbenzoyl)benzol, 1,3-Bis(4'-chlorbenzoyl)benzol und 1-(2'-Fluorbenzoyl)-4-(4'-fluorbenzoyl)benzol.

Die Kondensationsreaktion wird entweder in Substanz oder in Gegenwart eines inerten Lösungsmittels durchgeführt, in denen das gebildete Polymere bei der Reaktionstemperatur löslich ist. Als Lösungsmittel kommen beispielsweise in Frage: Diphenylsulfon, N-Cyclohexyl-2-pyrrolidon, cyclische aromatische Sulfone wie Dibenzothiophen-S,S-dioxid oder, weniger bevorzugt, Benzophenon und cyclische aromatische Ketone, wie 9-Fluorenon. Derartige Lösungsmittel sind u.a. in der DE-OS 2 803 873 beschrieben.

Ebenfalls kommen als Lösungsmittel in Frage N,N-Dimethylformamid, N,N-Dimethylacetamid oder N-Methyl-2-pyrrolidon. In diesem Fall ist dem Reaktionsgemisch ein geeignetes Wasserschleppmittel (z.B. Toluol) hinzuzufügen.

Die Reaktionstemperatur ist nach unten durch die Schmelztemperatur mindestens einer der Komponenten oder des Lösungsmittels und nach oben durch die Zersetzungstemperatur der Kondensationspartner bzw. des gegebenenfalls verwendeten Lösungsmittels begrenzt. Sie liegt im allgemeinen zwischen 100 und 400 °C, vorzugsweise zwischen 150 und 350 °C, und hängt u.a. von der Reaktivität der Kondensationspartner und der Art der verwendeten Lösungsmittel ab. Vorzugsweise beginnt man mit einer niedrigen Reaktionstemperatur und steigert die Temperatur allmählich oder stufenweise, wenn die Viskosität der Reaktionsmasse steigt.

Die Grenzviskosität, bestimmt nach DIN 51 562, der erwähnten Polyaryletherketone, als Maß für ihr

Molekulargewicht, gemessen in einer Lösung von 0,1 g des Polymeren in 100 ml Chloroform bei 25 °C, kann in dem weiten Bereich von 0,2-2,5 dl/g, bevorzugt 0,4-1,5 dl/g liegen. Die erwähnten Polyetherketone haben einen MFI (melt flow index) (5 Minuten Aufschmelzzeit bei 270 °C) von 4-100 g/10 min, bevorzugt 8-80 g/10 min und insbesondere von 15-80 g/10 min (gemäß DIN 53 735).

Die Transparenz der erfindungsgemäß eingesetzten Polyaryletherketone ist hoch und hängt in begrenztem Maße von der Anwesenheit von Verschmutzungen ab, die in Abhängigkeit von der Herstellungsmethode als Restsalz oder Restlösungsmittel vorliegen können. Entsprechende Reinigungsschritte, die beispielsweise in wiederholtem Auswaschen, wiederholtem Umfällen, aber auch im Filtrieren der Polymerlösung bzw. der Polymerschmelze bestehen können, verbessern die Transparenz der amorphen Polyaryletherketone. Die Transparenz bzw. die Sauberkeit des Materials ist immer in Verbindung mit konkreten Anwendungen zu beurteilen.

Die Brechungsindices der erfindungsgemäß eingesetzten Polyaryletherketone liegen insgesamt sehr hoch und weisen eine Abhängigkeit von dem chemischen Aufbau der Polyaryletherkette auf. Durch die Wahl bestimmter Monomerbausteine lassen sich Brechungsindices im Bereich von 1,55 bis 1,70, vorzugsweise 1,60 bis 1,68 einstellen, insbesondere zwischen 1,62 und 1,67.

Die geringe Wasseraufnahme der Polyaryletherketone ist auch vorteilhaft. Sie liegt mit Werten zwischen 0,1 und 0,5 % bei 23 °C und 85 % relativer Feuchte sehr tief. Bevorzugt werden Wasseraufnahmen zwischen 0,1 und 0,4 %. Diese Werte für die Wasseraufnahme sind erheblich geringer als bei den bisher für die Herstellung von Orientierungsschichten eingesetzen Polyetherimiden oder Polyamiden.

Die erwähnten Polyaryletherketone sind amorph. Ihre Glastemperaturen liegen gemäß DSC-Messungen (Differential Scanning Calorimetry) bei 20 °C/Min. oberhalb 155 °C und damit oberhalb der Glastemperatur von Polycarbonat. Bevorzugt werden Glastemperaturen von oberhalb 160 °C.

Die Dichten der amorphen Polyaryletherketone liegen generell unterhalb derer von Polyarylethersulphonen oder Polyaryletherimiden. Je nach gewähltem Kettenaufbau werden Dichten zwischen 1,2 und 1,4 g/cm$^3$ gemessen. Bevorzugt werden Werte für die Dichte von unterhalb 1,35 g/cm$^3$.

Übliche Hilfsmittel wie Stabilisatoren, UV-Absorber, Aufheller, Entformungsmittel und Antistatika können ohne Beeinträchtigung der beschriebenen Eigenschaften eingearbeitet werden.

Orientierungsschichten gemäß der Erfindung lassen sich aus Polyaryletherketonlösungen, z.B. in N-Methyl-2-pyrrolidon, mit Polymerisatgehalten von ca. 0,1 bis 5 Gew.-% herstellen. Diese Lösungen verhalten sich inert und sind sehr lagerungstabil. Aus den Polyaryletherketonlösungen lassen sich sogenannte Naßfilme herstellen, die bereits bei Temperaturen unterhalb von 100 °C verfestigt und somit gehärtet werden können, da sie nicht reaktiv sind und auch nicht chemisch verändert zu werden brauchen. Diese Orientierungsschichten werden von herkömmlichen Flüssigkristallsubstanzen auf Basis von Phenylpyrimidin oder Phenylcyclohexan nicht angelöst und besitzen glatte, defektfreie Oberflächen, die keine Risse oder andere Inhomogenitäten aufweisen.

Die orientierende Wirkung wurde an LCD-Zellen geprüft, deren Orientierungsschicht aus erfindungsgemäß verwendeten Polyaryletherketonen, die Struktureinheiten der Formel I enthalten, hergestellt worden ist. Dazu wird die maximale Lichtextinktion der gefüllten Zelle zwischen gekreuzten Polarisatoren gemessen. Die bei dynamischer elektrischer Ansteuerung erhaltenen Kontrastwerte sind ein Maß für die Qualität der Orientierungsfähigkeit. Außerdem wird der polarisationsmikroskopisch erhaltene visuelle Eindruck zur Bewertung der Kontrastfähigkeit mit herangezogen. Mit den hergestellten Orientierungsschichten aus Polyaryletherketonen wurden nun überraschenderweise besonders hohe Kontrastwerte mit ferroelektrischen Zellentypen erhalten, im Vergleich zu Orientierungsschichten aus Polyetherimid gemäß dem Stand der Technik.

## Beispiele

1) In einem 2-1-Vierhalskolben mit Rührer und Innenthermometer wurden 192,5 g 1,4-Bis(4'-fluorbenzoyl)benzol, 137 g 2,2-Bis(4-Hydroxyphenyl)propan (Bisphenol-A), 100 g $Na_2CO_3$ und 400 g Diphenylsulfon unter Inertgasspülung aufgeschmolzen. Die Reaktionsmischung wurde 3 Stunden bei 230 °C gerührt. Anschließend wurde die Temperatur der Mischung auf 240 °C angehoben und 1,5 Stunden weitergerührt, schließlich wurden noch weitere 1,5 Stunden bei 250 °C gerührt. Die Reaktionsmischung wurde ausgegossen, nach Erkalten zerkleinert und schließlich gemahlen. Das pulverförmige Produkt wurde mehrfach mit Aceton und Wasser ausgewaschen und schließlich 12 Stunden bei 140 °C unter vermindertem Druck getrocknet. Das erhaltene weiße Pulver hatte eine Glastemperatur (Tg) von 160 °C und eine inhärente Viskosität von 0,64 dl/g, gemessen bei 25 °C in einer Chloroform-Lösung, die 0,1 g Polymeres in 100 cm$^3$ Lösung enthält. Beim Aufschmelzen wurde eine transparente Formmasse erhalten.

2) 192,5 g 1-(4'-Fluorbenzoyl)-4(2'-fluorbenzoyl)benzol und 66 g Hydrochinon wurden nach der in Beispiel 1 beschriebenen Weise umgesetzt. Man erhielt ein Produkt mit einer inhärenten Viskosität von

0,72 dl/g und einer Tg von 155 °C. In geschmolzenem und nachträglich erstarrtem Zustand ist das Material transparent.

3) 201,6 g 2,2-Bis(4-Hydroxyphenyl)hexafluorpropan (6F-Bisphenol-A) wurden mit 130,8 g 4,4'-Difluorbenzophenon in der in Beispiel 1 beschriebenen Weise umgesetzt. Das erhaltene Polymere hatte eine Tg von 140 °C und eine inhärente Viskosität (gemessen unter den in Beispiel 1 genannten Bedingungen) von 0,40 dl/g. In geschmolzenem und nachträglich erstarrtem Zustand ist das Material transparent.

4) 123 g Bisphenol-A und 6,6 g Hydrochinon wurden mit 192,5 g 1,4-Bis(4'-fluorbenzoyl)benzol in der in Beispiel 1 eine Tg von 163 °C und eine inhärente Viskosität (gemessene unter den in Beispiel 1 genannten Bedingungen) von 0,70 dl/g. In geschmolzenem und nachträglich erstarrtem Zustand ist das Material transparent.

5) Herstellung von Polymerisatschichten auf Glasträgern Es wurden jeweils 1,5 und 5 Gew.-%ige Lösungen der Polymerisate der Beispiele 2 und 3 in $\gamma$-Butyrolacton in verschiedenen Schichtdicken auf Glasträger aufgetragen. Der Auftrag erfolgte durch übliches Aufschleudern (30 sec. lang) bei verschiedenen Umdrehungsgeschwindigkeiten unter Bildung unterschiedlich dicker Naßfilme, die anschließend bei 150 °C 2 Stunden lang getrocknet wurden. Es wurden defektfreie homogene Polymerisatschichten mit folgenden Dicken (in $\mu$m) erhalten:

| | Polymerisat aus | | |
|---|---|---|---|
| | Beisp. 2 | | Beisp. 3 |
| U/min | 1,5 % | 5 % | 5 % |
| 7000 | 10 | 45 | 40 |
| 4000 | 15 | 55 | 50 |
| 2000 | 25 | 85 | 75 |
| 1000 | 40 | - | - |

6) Es wurden jeweils 1,5 Gew.-%ige Lösungen der Polymerisate aus Beispiel 1 bis 4 in wasserfreiem N-Methylpyrrolidon hergestellt und diesen 0,1 Gew.-%, bezogen auf die Lösung, $\gamma$-Aminopropyltriethoxysilan zugesetzt. Die so erhaltenen Lösungen wurden jeweils mit 3000 U/min auf Glasträger bzw. auf mit Indium-Zinnoxid beschichtete Glasträger 30 sec. lang aufgeschleudert und die entstanenen Naßfilme anschließend bei 90 °C in einem Trockenschrank bei vermindertem Druck getrocknet. Es wurden trotz der niedrigen Trocknungstemperatur von 90 °C sehr gute Haftungen der Polymerisatschichten gemäß der Erfindung auf beiden beschichteten Glasträgertypen erzielt.

7) Zum Nachweis der vorteilhaften Anwendbarkeit der Polyaryletherketone als Orientierungsschichten in elektro-optischen Schalt- und Anzeigeelementen wurde eine verdrillte nematische Zelle vom Schadt-Helfrisch-Typ (vgl. M. Schadt, W. Helfrisch, Appl. Phys. Lett. 18 (1971), 127) hergestellt. Dazu wurde auf Glasträgern jeweils eine mit Indium-Zinnoxid beschichtete Elektrodenfläche von 4x4 mm strukturiert, gereinigt, getrocknet und mit dem Polymerisat aus Beispiel 1 beschichtet und gerieben. Jeweils 2 der so erhaltenen beschichteten Glasträger wurden unter Verwendung von Abstandhaltern zu einer Zelle mit einem lichten Elektrodenabstand von 4,6 $\mu$m verklebt, wobei die Reibrichtungen auf den Polymerisatflächen der beiden Glasträger um 90° gegeneinander verdreht wurden. Die Zelle wurde mit der nematischen Flüssigkristallmischung ZLI 1565 (Hersteller: Fa. E. Merck, Darmstadt, Bundesrepublik Deutschland) unter Zusatz von 0,1 Gew.-%, bezogen auf ZLI 1565, 4R-(-Nonyloxy-pyrimidin-5-yl)-phenyl-2,2-dimethyl-1,3-dioxolan-4-carbonsäureester gefüllt und der elektro-optische Effekt durch Anlegen bzw. Abschalten einer Spannung geprüft bzw. nachgewiesen. Bei Verwendung der Orientierungsschichten aus dem Polyaryletherketon des Beispiels 1 betrug die Schwellspannung $U_{10}$ = 2,4 Volt (10%iger Anstieg der Intensität), das Verhältnis $U_{90}/U_{10}$ = 1,44 (bei 25 °C). Ein elektro-optischer Effekt ist damit nachgewiesen.

8) Einsatz für ferrolektrische Flüssigkristalldisplays Zur Prüfung der vorteilhaften Verwendbarkeit der Polyaryletherketone als Orientierungsschichten in ferroelektrischen Displays wurde eine Zelle wie in Beispiel 7 beschrieben, unter Verwendung des Polymerisats aus Beispiel 1 hergestellt, jedoch mit dem Unterschied, daß die Reibrichtungen auf den Polymerisatflächen der beiden Glasträger parallel zueinander verlaufen und der Elektrodenabstand 1,9 $\mu$m betrug. Die Zelle wurde mit einer ferroelektrischen

Testmischung auf Basis von Phenylpyrimidinen mit der spontanen Polarisation 17 $nC/cm^2$ (25 °C) gefüllt und der Kontrast in einem Pulsexperiment, wie beschrieben bei Hughes and Saunders, Liquid Crystals 3 (10), 1401-1410 (1988), gemessen. Das Kontrastverhältnis, d.h. der Quotient der Transmissionswerte im hellen und dunklen Schaltzustand betrug 55:1 bei dem Polyaryletherketon aus Beispiel 1. Eine gleiche Zelle derselben Bauart, die jedoch mit einer handelsüblichen Orientierungsschicht (Hitachi PIX 1400, Hersteller Hitachi Chemicals Co Ltd, Tokio, Japan) beschichtet war, wurde zum Vergleich herangezogen, Kontrastverhältnis 16:1.

9) Transparenzmessung

Es wurde der Extinkionskoeffizient des Polyaryletherketons (PAEK) gemäß Beispiel 1 und der eines Polyetherimides ®ULTEM 1000 (Hersteller: General Electric Co., Schenectady N.Y., USA) mit Hilfe eines Spektralphotometers bei einer Wellenlänge von 500 nm bestimmt. PAEK: 132,2 $m^{-1}$, ULTEM 1000 (Vergleich): 436,0 $m^{-1}$.

Die hohe Transparenz wirkt sich vorteilhaft auf die Verwendung der erfindungsgemäßen Polyaryletherketone in LCDs aus.

10) Wasseraufnahmefähigkeit

Die Wasseraufnahmefähigkeit eines erfindungsgemäß eingesetzten Polyaryletherketons sowie handelsüblicher Polymere, die als Orientierungsschichten für Flüssigkristalldisplays verwendet werden, wurde bei 85 % rel. Feuchte und 23 °C bestimmt und die erhaltenen Werte verglichen:

| | Wasseraufnahme |
|---|---|
| Polyaryletherketon, Beispiel 1 | 0,35 % |
| Polyamid 6 | 2,4 % |
| Polyetherimid (ULTEM 1000) | 1,0 % |

Dieses Beispiel zeigt, daß sich Polyaryletherketone vorteilhaft für die Herstellung solcher Flüssigkristalldisplays eignen, deren Bestandteile durch Feuchtigkeit in der Orientierungsschicht in ihrer Funktionsweise beeinflußt werden können.

## Patentansprüche

1. Verwendung mindestens eines amorphen, aromatischen Polyaryletherketons zur Herstellung von Orientierungsschichten für Flüssigkristallanzeige und -schaltelemente, dadurch gekennzeichnet, daß mindestens ein Polyaryletherketon eingesetzt wird, das aus mindestens einer Struktureinheit der Formel I

   -O-A-O-B- (I)

   aufgebaut ist,
   wobei A ausgewählt ist aus den Resten

$A^1$ 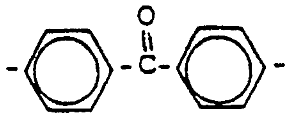

$A^2$ 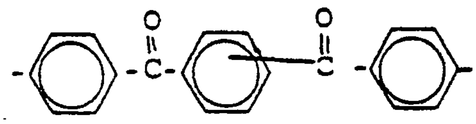 (m oder p)

$A^3$ 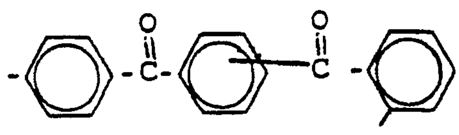 (m oder p)

und B ausgewählt ist aus den Resten

$B^1$ 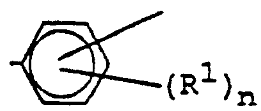

$B^2$ 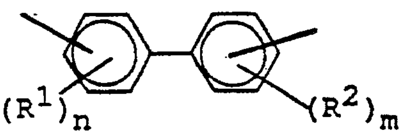

$B^3$ 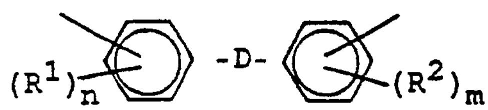

$B^4$ 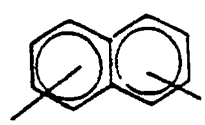

$B^5$ 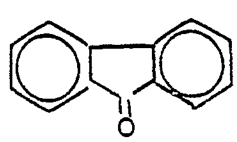

$B^6$ 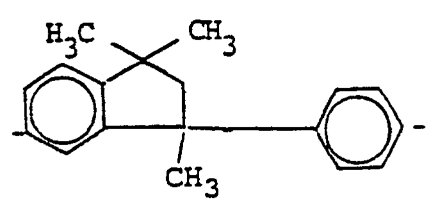

$B^7$ 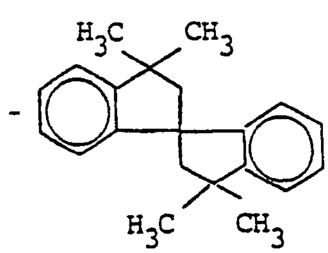

$B^8$ 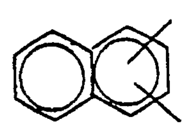

mit $R^1$ und $R^2$, die gleich oder verschieden sind und Halogen, $(C_1\text{-}C_8)$-Alkyl oder -Alkoxy, darstellen, m

und n sind gleich oder verschieden und bedeuten Null oder eine ganze Zahl von 1 bis 4, D ist ausgewählt aus den zweiwertigen Resten

$D^1$ $-O-$, $D^2$ $>C=O$, $D^3$ $-CH_2-$,

$D^4$ $-C(CH_3)_2-$, $D^5$ $-C(CF_3)_2-$,

$D^6$ 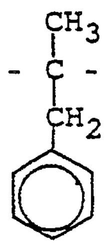 , $D^7$ 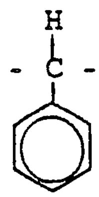 , $D^8$ 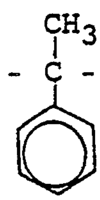

$D^9$ 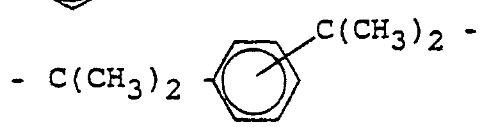 (m oder p)

$D^{10}$ 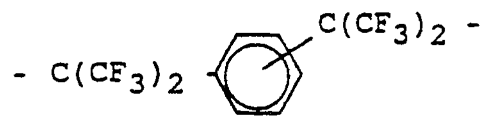 (m oder p),

wobei das molare Verhältnis der Einheiten A und B 0,9 bis 1,1 zu 1,0 beträgt.

**2.** Verwendung nach Anspruch 1, dadurch gekennzeichnet, daß $R^1$ und $R^2$ Brom, ($C_1$-$C_4$)-Alkyl oder -Alkoxy darstellt, m und n die Werte Null, 1 oder 2 darstellen, insbesondere Null oder 2 sind und das molare Verhältnis der Einheiten A zu B 1:1 ist.

**3.** Verwendung nach Anspruch 1 oder 2, dadurch gekennzeichnet, daß Homo- oder Copolykondensate der Polyaryletherketone eingesetzt werden.

**4.** Verwendung nach Anspruch 3, dadurch gekennzeichnet, daß in Copolykondensaten 0-50 Mol% Einheiten $A^2$ und 50-0 Mol % Einheiten $A^3$, vorzugsweise 5-30 Mol% $A^2$ und 45-20 Mol% $A^3$ in Gegenwart von $B^1$, $B^2$, $B^4$, in den Polyaryletherketonen enthalten sind.

**5.** Verwendung nach Anspruch 3, dadurch gekennzeichnet, daß in Copolykondensaten der Rest A ausgewählt ist aus $A^1$, $A^2$, $A^3$ und im Rest B) 0-50, vorzugsweise 5-20, insbesondere 5-10 Mol% Einheiten $B^1$ und 50-0 Mol-% ausgewählt aus $B^2$ bis $B^8$, vorzugsweise 45-30, insbesondere 45-40 Mol% Einheiten, ausgewählt aus $B^2$, $B^3$, $B^4$, enthalten sind.

**6.** Verwendung nach einem oder mehreren der Ansprüche 1 bis 5, dadurch gekennzeichnet, daß als Gruppierung A die Reste $A^1$ und $A^2$, als Gruppierung B die Reste $B^1$ bis $B^3$, als Gruppierung D die Reste $D^2$ bis $D^{10}$, insbesondere $A^2$, $B^3$, $D^4$, $D^5$, $D^9$ und $D^{10}$ in den Polyaryletherketonen vorhanden sind.

**7.** Verwendung nach einem oder mehreren der Ansprüche 1 bis 6, dadurch gekennzeichnet, daß die Gruppierungen A, B, und D para-Verknüpfungen aufweisen.

**8.** Verwendung nach einem oder mehreren der Ansprüche 1 bis 7, dadurch gekennzeichnet, daß die Polyaryletherketone mindestens eine der folgenden Charakteristika aufweisen:

a) eine Grenzviskosität von 0,2-2,5 dl/g, vorzugsweise 0,4-1,5 dl/g (0,1 g der Polymeren in 100 ml Chloroform, 25 °C),

b) einen MFI von 4-100 g/10 min, vorzugsweise 8-80 g/10 min, insbesondere 15-80 g/10 min (5 min. Aufschmelzzeit bei 270 °C),

c) einen Brechungsindex im Bereich von 1,55 bis 1,70, vorzugsweise 1,60 bis 1,68, insbesondere 1,62 bis 1,67,
d) eine Wasseraufnahme von 0,1 bis 0,5 %, vorzugsweise 0,1 bis 0`4 % bei 23 °C und 85 % relativer Feuchte und
e) eine Dichte zwischen 1,2 und 1,4 g/cm$^3$, vorzugsweise unterhalb 1,35 g/cm$^3$.